# EUROPEAN PATENT SPECIFICATION

(11) **EP 3 316 428 B1**
(45) Date of publication and mention of the grant of the patent: **29.01.2020**
(21) Application number: 16814035.8
(22) Date of filing: 26.04.2016
(51) Int. Cl.: H01H 31/28, H01H 33/12, H02B 13/035

(54) **DISCONNECTING DEVICE AND GAS INSULATED SWITCHGEAR USING SAME**
TRENNVORRICHTUNG UND GASISOLIERTE SCHALTANLAGE DAMIT
DISPOSITIF DE DÉCONNEXION ET APPAREILLAGE DE COMMUTATION À ISOLATION GAZEUSE UTILISANT CELUI-CI

(30) Priority: 24.06.2015 JP 2015126152
(43) Date of publication of application: 02.05.2018
(73) Proprietor: Mitsubishi Electric Corporation, Chiyoda-ku Tokyo 100-8310 (JP)
(72) Inventor: KURODA, Takashi, Tokyo 100-8310 (JP); YOSHIDA, Tadahiro, Tokyo 100-8310 (JP)
(74) Representative: Sajda, Wolf E.
(86) International application number: PCT/JP2016/062967
(87) International publication number: WO 2016/208264

(56) References cited:
- EP-A1- 1 160 945
- EP-A2- 0 681 352
- JP-A- 2001 067 995
- JP-A- 2003 068 173
- JP-A- 2006 260 958
- JP-A- 2008 010 391
- JP-B2- 2 788 014
- US-A1- 2005 219 804
- US-A1- 2011 000 771

## Description

### Technical Field

The present invention relates to gas-insulated switchgear which is used for an electric power transmission-distribution facility, an electric power receiving facility and the like, and relates to a disconnecting device which is enclosed, for example, in a pressure tank.

### Background Art

As general gas-insulated switchgear, there is gas-insulated switchgear which is indicated, for example, in Patent Document 1. The gas-insulated switchgear is attached to and supported by a case in which a pressure tank, in which an electric power instrument, such as switchgear, and insulating gas are enclosed, a bus bar conductor for connecting to adjacent gas-insulated switchgear and the like, and an incoming cable, which is led from the outside of the switchgear, are connected to a cable socket, in a state where the case is composed of, for example, a sheet metal component. In the pressure tank, an adequate number of a disconnector, by which a circuit is opened or closed, and a vacuum circuit breaker, by which a short-circuit current is broken when a fault is caused, are arranged as necessary.

At an outer circumference portion of the pressure tank, an operation mechanism for disconnector, by which the disconnector is operated in a state where an airproof state is maintained and the operation mechanism penetrates a wall surface of the pressure tank, and an operation mechanism for circuit breaker, by which the vacuum circuit breaker is similarly driven, are mounted at a front side of the pressure tank.

As one example of a configuration of a disconnecting device (or referred to as a disconnector) which is installed in the gas-insulated switchgear which is described above, there is a configuration of a disconnecting device which is indicated, for example, in Patent Document 2. A conventional disconnecting device is composed of a shaft terminal, which is used as a rotational shaft of a movable rod, an connecting terminal, to which the movable blade is engaged in a state where the disconnecting device is turned on, an insulating frame for disconnecting device, an insulating rod, an operation shaft, a bearing, a grounding terminal, and an operation mechanism.

In the disconnecting device which is described above, the connecting terminal, the hinge terminal, the bearing, and the grounding terminal are positioned and fixed on an identical support insulating component, and the insulating frame for disconnecting device is composed a vertical standing portion and horizontal portions which are protruded from a lower portion of the vertical standing portion to left-right end portions, and the connecting terminal is mounted at an upper end portion of the vertical standing portion, and the hinge terminal is mounted at one of the horizontal portions at the left-right end portions, and the bearing is mounted at the other horizontal portion, and the bearing is arranged at a reverse side of a rotational area of the movable blade in a state where the vertical standing portion is sandwiched at a middle position, and the insulating rod, by which a lever of the operation shaft, which is supported by the bearing, and the movable blade are linked, penetrates a hole of the vertical standing portion of the support insulating component so as to be arranged.

The Patent Document US 2005/219804 A1 describes a disconnecting device according to the preamble of claim 1.

### List of Citations

### Patent Documents

Patent Document 1: Japanese Laid-Open Patent Publication JP 2013-131 440 a
Patent Document 2: Japanese Patent Publication JP 2 788 014 B

### SUMMARY OF THE INVENTION

### Problems to be Solved by the Invention

A conventional disconnecting device is configured as described above in such a way that a terminal attachment position between identical phases is positioned and fixed on an identical support insulating component, so that when the disconnecting device is assembled, in a parallel degree of each of terminals between identical phase poles, a difference between a hole diameter of an attachment hole, which is provided at the support insulating component, and a shaft diameter of a bolt, exists, whereby the terminals are inclined by a torque which is caused when the terminals are tightened, and a contact area for a movable blade is varied from a design value, and a function cannot be satisfied.

In an actual state, in order to adjust a side surface of each of the terminals, the terminal at each of positions is sandwiched by using a flat plate, of which flat surface degree is secured, and a press plate, whereby a parallel degree of a contact surface for the movable blade of each of the terminals is adjusted. Moreover, the disconnecting device is assembled by using a jig, so that an operation, in which the terminals are temporally assembled, and the jig is adjusted, and a final tightening is performed, and the jig is detached, is required, and there is problem in that time is required in order to assemble the disconnecting device.

A disconnecting device, which includes three positions which are a grounding position, a disconnection position, and an input position, is designed in such a way that an arrangement of the terminals is formed as a triangle shape, in order to effectively utilize space. At a support insulating component in a conventional configuration, for example, when a movable blade is engaged to an connecting terminal, a bending force is acted to a vertical standing portion.

In this case, a cross section of the vertical standing portion has a wide width with respect to a thickness, and an attachment position of the connecting terminal is high, so that the disconnecting device has a configuration in which a bending solidity with respect to an operation force is decreased.

Therefore, it is required that the thickness of the vertical standing portion is increased, and the bending solidity is increased. However, in this case, there have been problems in that a usage amount of a material is increased, and a cost is increased, and moreover, a handling capability is deteriorated.

The present invention has been made to solve the above-described problems, and an object of the invention is to obtain a disconnecting device which is easily assembled and can be assembled in a short time.

### Means for Solving the Problems

In accordance with the invention, a disconnecting device as set forth in claim 1 is provided. Further embodiments are inter alia disclosed in the dependent claims. In particular in the disconnecting device of the present invention, an insulating frame, to which terminals are fixed, includes side wall portions which are provided in a state where the side wall portions include a space portion and are separated; a first base portion which is integrally provided, at one side end portion of the side wall portions, with the side wall portions, and includes a fixing portion by which an connecting terminal is fixed; second base portions which are integrally provided, between the wall portions, with the side wall portions, and include a fixing portion by which a hinge terminal is fixed; and third base portions which are integrally provided, at the other side end portion of the side wall portions, with the side wall portions, and are fixed to a device attachment portion.

### Effects of the Invention

According to the present invention, a disconnecting device, which is easily assembled and can be assembled in a short time, can be obtained.

### BRIEF DESCRIPTION OF THE DRAWINGS

- FIG. 1: is a side cross-sectional view which indicates a schematic configuration of gas-insulated switchgear of the present invention;
- FIG. 2: is a side cross-sectional view which indicates a disconnecting device according to Embodiment 1 of the present invention;
- FIG. 3: is an oblique perspective view which indicates an insulating frame of the disconnecting device according to Embodiment 1 of the present invention;
- FIG. 4: is an oblique perspective view which indicates an insulating frame of a disconnecting device according to Embodiment 2 of the present invention;
- FIG. 5: is an oblique perspective view which indicates an insulating frame of a disconnecting device according to Embodiment 3 of the present invention;
- FIG. 6: is an oblique perspective view which indicates an insulating frame of a disconnecting device according to Embodiment 4 of the present invention;
- FIG. 7: is an oblique perspective view which indicates an insulating frame of a disconnecting device according to Embodiment 5 of the present invention; and
- FIG. 8: is an oblique perspective view which indicates an insulating frame of a disconnecting device according to Embodiment 6 of the present invention.

### MODES FOR CARRYING OUT THE INVENTION

### Embodiment 1

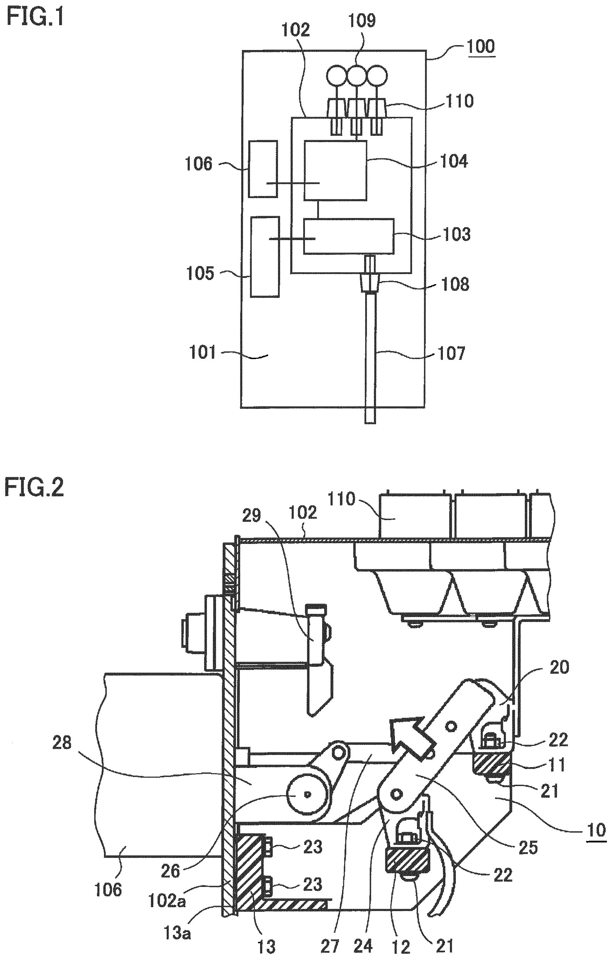

FIG. 1 is a side cross-sectional view which indicates a schematic configuration of gas-insulated switchgear of the present invention. As indicated in FIG. 1, gas-insulated switchgear 100 is composed of a case 101, a pressure tank 102 which is arranged in the case 101, a circuit breaker 103 and a disconnecting device 104, which are installed and arranged in the pressure tank 102, an operation mechanism 105 for circuit breaker and an operation mechanism 106 for disconnecting device, which are arranged in the case 101, and the like.

In a specific description, the pressure tank 102 in which an electric power instrument, such as switchgear, and insulation gas are enclosed, a bus bar 109 for connecting to adjacent gas-insulated switchgear and the like, and an incoming cable 107, which is led from the outside of the switchgear, are attached to the case 101, which is composed, for example, of a plate metal component, so as to be supported. In the pressure tank 102, an adequate number of the disconnecting device 104, by which a circuit is opened or closed, and the circuit breaker 103, by which a short-circuit current is broken when a fault is caused, are arranged as necessary.

At an outer circumference portion of the pressure tank 102, the operation mechanism 106 for disconnecting device, by which the disconnecting device 104 is operated in such a way that an airproof state is maintained and the operation mechanism 106 penetrates a wall surface of the pressure tank 102, the operation mechanism 105 for circuit breaker, by which the circuit breaker 103 is similarly driven, a bus bar bushing 110, by which the bus bar 109 is connected to the circuit in the pressure tank 102, and a bushing 108, by which the incoming cable 107 is connected to the circuit in the pressure tank 102, are attached.

Hereinafter, the disconnecting device 104 according to Embodiment 1 of the present invention, which is used for the gas-insulated switchgear which is configured as described above.

FIG. 2 is a side cross-sectional view which indicates the disconnecting device 104 according to Embodiment 1 of the present invention. FIG. 2 indicates a turn-on state (a connection state) of the disconnecting device 104. An insulating frame 10 for the disconnecting device 104 is attached, by bolts 23, to a tank front plate 102a, which is used as a device attachment portion, of the pressure tank 102. A hinge terminal 24 is attached, by using each of bolts 21 and nuts 22, to base portions 12 (or referred to as second base portions) which are provided at a lower side of the insulating frame 10 for the disconnecting device 104, and an connecting terminal 20 is attached, by using each of the bolts 21 and the nuts 22, to a base portion 11 (or referred to as a first base portion) which is provided at a upper side of the insulating frame 10.

A movable blade 25 is attached to the hinge terminal 24, and the movable blade 25 is driven by using an insulating rod 27 which is linked to a lever having an arm shape, which is mounted to a three-phase link shaft 26. A support 28 of the three-phase link shaft 26 is attached to the tank front plate 102a of the gas pressure tank 102, and the three-phase link shaft 26 is rotatably supported by the support 28. The three-phase link shaft 26 is connected to the insulating rod 27, and the three-phase link shaft 26 is rotated and driven by using the operation mechanism 106 for disconnecting device, which is mounted at the outside of the gas pressure tank 102.

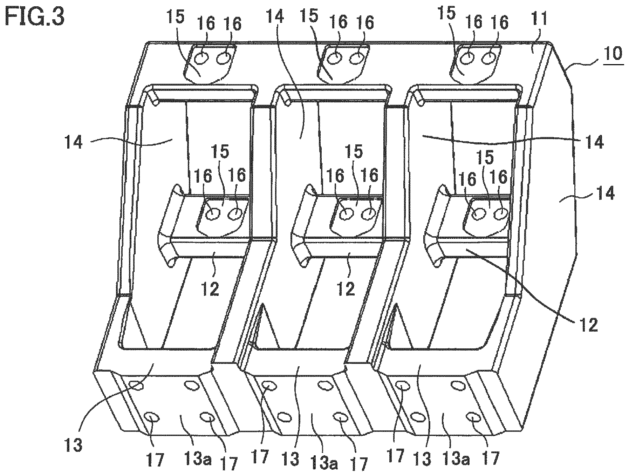

FIG. 3 is an oblique perspective view which indicates the insulating frame 10 for disconnecting device, which is used for the disconnecting device 104 according to the present invention. Contacting surfaces (mounting surfaces) 13a for the tank front plate 102a of the gas pressure tank 102 are provided at base portions 13 (or referred to as third base portions) of the insulating frame 10, and fixing holes 17 corresponding to a required number are provided in order to attach the contacting surfaces 13a to the tank front plate 102a.

Side wall portions (partitions) 14 having a vertical plate shape, in a state where a plate width direction is faced to a vertical direction (a perpendicular direction), are provided at four positions, which are positioned at left-right both end portions and among phases of a three-phase circuit, from the contacting surfaces 13a for the tank front plate 102a to a deep direction, and the base portions 12 for attaching the terminals are provided in such a way that the base portions 12 penetrate, at first glance, between each of the side wall portions 14 having a vertical plate shape. The base portion 11, the base portions 12, the base portions 13, and the side wall portions 14 of the insulating frame 10 are integrally formed.

Dent portions (concave portions) 15 corresponding to three phases, which are fitted to surfaces of the terminals for attaching and are used as fixing portions for attaching the terminals, are provided at the base portion 11 and the base portions 12, in order to attach the hinge terminal 24 and the connecting terminal 20. Holes 16 for fastening bolt, in which the bolts 21, which are indicated in FIG. 2, are inserted, are provided at each of the dent portions 15.

In the disconnecting device 104 which is configured as described above, if the movable blade 25 is driven by using the operation mechanism 106 for disconnecting device via the three-phase link shaft 26 and the insulating rod 27, for example, when the disconnecting device 104 is shifted from a turn-on state to a disconnection state, an operation force is acted in an arrow direction (in an oblique and upper direction at a front side of the switchgear), which is indicated in FIG. 2, in accordance with a frictional force which is caused by a contact pressure which is biased to a contact portion by a contact pressure spring (which is not illustrated) between the movable blade 25 and the connecting terminal 20.

In other words, the connecting terminal 20 is pulled by the movable blade 25, and a bending force is also acted to the insulating frame 10 for the disconnecting device 104 via the base portions 12. Therefore, at a neighborhood of a rotational supporting point of the movable blade 25, a cross section of the side wall portions 14, which is corresponding to the bending force (in an oblique and upper direction at a front side of the switchgear) of the side wall portions (partitions having a vertical plate shape) 14, is formed in such a way that a horizontal width of the cross section is small and a size in a height direction is large with respect to a bending force, so that a secondary moment of the cross section is large in comparison with a conventional form, whereby a high solidity is realized.

Moreover, a deformation is minutely suppressed in accordance with the solidity of the side wall portions 14, whereby a loss of a force, which is caused when the force is transmitted, can be reduced when the disconnecting device 104 is operated. When the disconnecting device is operated from a disconnection position (a turn-off position) to a turn-on position (a connection position), because a direction of the arrow, which is indicated in FIG. 2, is reversed (in a reverse direction), a capability (a strength) of the insulating frame 10 for the disconnecting device 104 is maintained.

The insulating frame 10 for the disconnecting device 104 according to Embodiment 1 is formed as a three-phase integration, and the side wall portions 14 are arranged at the left-right end portions and among the phases as necessary, and in order to attach the terminals, the base portions 12 are provided in such a way that the base portions 12 penetrate the side wall portions 14 among the phases.

The dent portions 15, which are fitted to the shapes of the bottom surfaces of the terminal, are provided at the base portions 12 for attaching the terminals, and the dent portions 15 and the terminals for attaching are fitted, and the insulating frame 10 for the disconnecting device 104 and the terminals are engaged by using the bolts and the like, whereby an angle, at which the terminals are suitably contacted to the movable blade 25 in accordance with a torque which is caused at a time of fastening, is maintained.

Moreover, the left-right end portions, which are provided at the insulating frame 10 for the disconnecting device 104, and the side wall portions 14, which are provided among the phases, are arranged in such a way that the left-right end portions and the side wall portions 14 are parallel to an operation force which is caused when the disconnecting device 104 is operated. In other words, the disconnecting device 104 has a configuration in which a height is increased with respect to a direction of a bending force, which is caused by the operation force, and with respect to a length in a width direction, and a bending solidity of a cross section is increased.

According to the disconnecting device 104 which is described in Embodiment 1, the disconnecting device 104 is configured in such a way that a direction of an operation force, which is caused when the disconnecting device 104 is driven, is parallel to the surfaces of the side wall portions 14 of the insulating frame 10 which is used as a support insulating component, so that a solidity of the insulating frame 10 is improved in comparison with a solidity of a form of a conventional insulating frame.

A usage amount of a material is reduced in comparison with a conventional usage amount of a material, and the insulating frame 10 for the disconnecting device 104 can be manufactured at a low cost. Moreover, a weight reduction of the insulating frame 10 for the disconnecting device 104 can be realized, so that a handling capability is improved when the disconnecting device 104 is produced and assembled.

### Embodiment 2

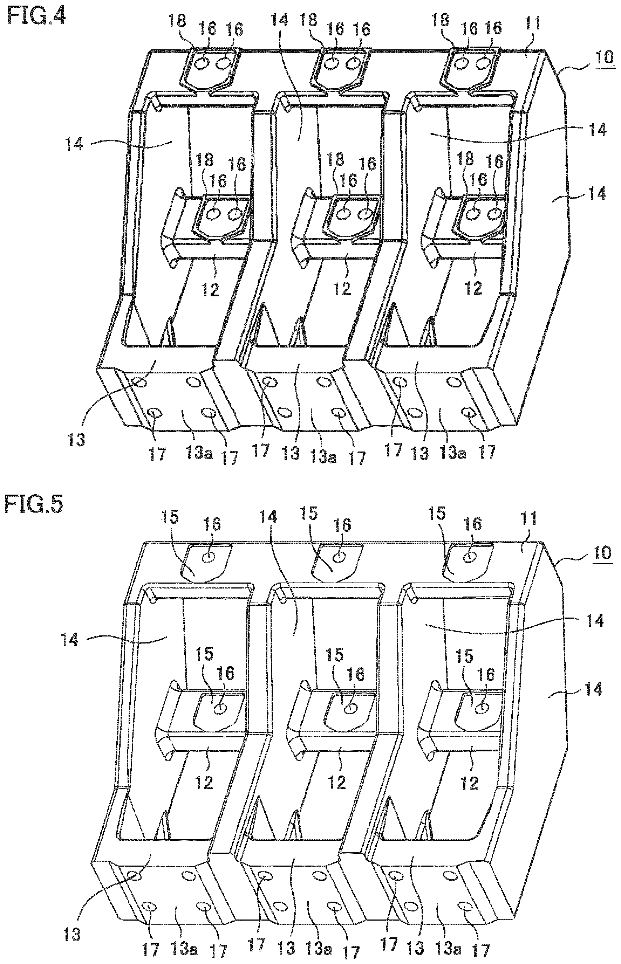

Hereinafter, a disconnecting device according to Embodiment 2 of the present invention will be explained. FIG. 4 is an oblique perspective view which indicates an insulating frame of the disconnecting device according to Embodiment 2 of the present invention.

In the disconnecting device according to Embodiment 2, in order to position terminals on a support insulating component, protrusion wall portions 18 having a convex shape, which surround outer circumferences of the terminals in such a way that the protrusion wall portions 18 are used as fixing portions and are fitted to the outside shape widths (both sides) of the terminals and an end portion at a deep side, are provides as indicated in FIG. 4, instead of providing the dent portions (concave portions) 15 composing the fixing portions, which are indicated in FIG. 3, in the disconnecting device according to Embodiment 1. The other configuration according to Embodiment 2 is similar to the configuration according to Embodiment 1, so that an explanation is omitted.

Even in the disconnecting device according to Embodiment 2, which is described above, an effect, which is similar to an effect according to Embodiment 1, is obtained.

### Embodiment 3

FIG. 5 is an oblique perspective view which indicates a configuration of an insulating frame of a disconnecting device according to Embodiment 3 of the present invention. In the disconnecting device according to Embodiment 3, in order to position terminals on a support insulating component, dent portions (concave portions) 15, which are fitted to the outside shape widths (both sides) of the terminals and an end portion at a deep side, are provided as indicated in FIG. 5, instead of providing the dent portions (concave portions) 15, which are indicated in FIG. 3, in the disconnecting device according to Embodiment 1, and gaps between the outside shapes of the terminals and the dent portions 15 are reduced.

Moreover, one of holes 16 for fastening bolt is provided at each of the dent portions 15. The other configuration according to Embodiment 2 is similar to the configuration according to Embodiment 1, so that an explanation is omitted.

In the disconnecting device according to Embodiment 3, which is configured as described above, an effect, which is similar to an effect according to Embodiment 1, can be obtained, and the gaps between the outside shapes of the terminals and the dent portions 15 are reduced and a minimum backlash of the terminals is realized, whereby it is possible that one of holes 16 for fastening bolt is used, and it is possible that a cheap manufacture cost of the insulating frame 10 is realized, and moreover, it is possible that a simple attachment operation for the terminals is realized.

### Embodiment 4

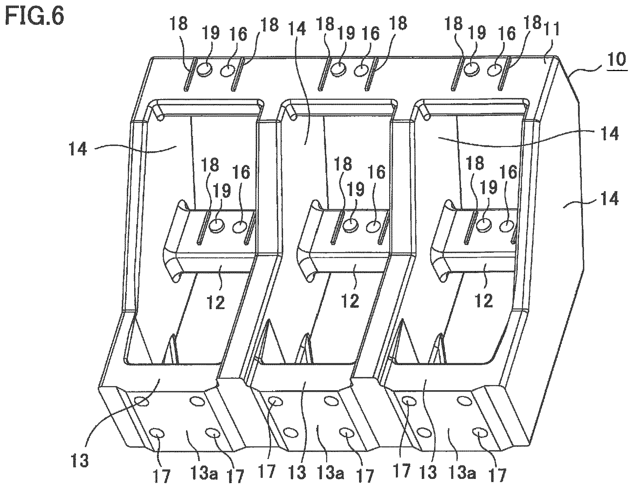

FIG. 6 is an oblique perspective view which indicates a configuration of an insulating frame of a disconnecting device according to Embodiment 4 of the present invention.

In the disconnecting device according to Embodiment 4, in order to position terminals on a support insulating component, protrusion wall portions 18, which are used as fixing portions and are fitted to the outside shape widths (both sides) of the terminal, are provided as indicated in FIG. 6, instead of providing the dent portions (concave portions) 15 composing the fixing portions, which are indicated in FIG. 3, in the disconnecting device according to Embodiment 1, and moreover, one of protrusion portions 19 for fixing, which are engaged to holes of a terminal conductor, and one of holes 16 for fastening bolt are provided. The other configuration according to Embodiment 2 is similar to the configuration according to Embodiment 1, so that an explanation is omitted.

In the disconnecting device according to Embodiment 4, which is configured as described above, an effect, which is similar to an effect according to Embodiment 1, can be obtained, and a backlash on attachment surfaces of the terminals can be prevented by using the protrusion wall portions 18 and the protrusion portions 19 for fixing, and moreover, the terminal can be easily engaged by using one bolt. Thereby, an attachment operation for the terminal can be simply performed.

### Embodiment 5

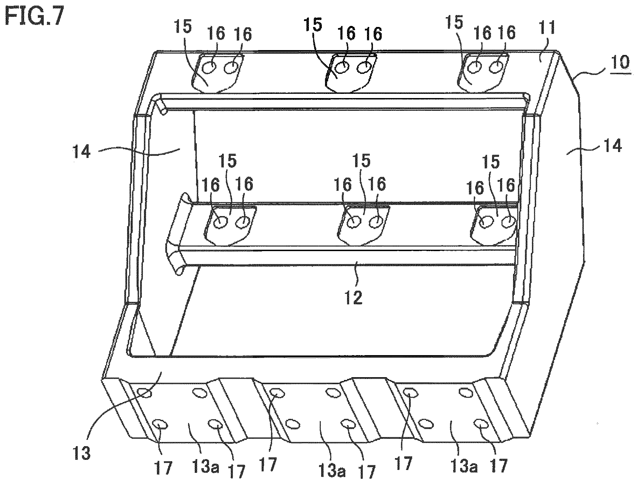

FIG. 7 is an oblique perspective view which indicates a configuration of an insulating frame of a disconnecting device according to Embodiment 5 of the present invention.

A shape of the insulating frame, which is used as a support insulating component, is not limited to a shape of the insulating frame which is indicated in Embodiment 1, and an insulating frame 10, which is indicated in FIG. 7, in which the side wall portions 14 for partitioning portions among the phases, which are indicated in FIG. 3, are deleted, can be applied in a model of which size is small in a width direction, in accordance with a capability of gas-insulated switchgear. The other configuration according to Embodiment 5 is similar to the configuration according to Embodiment 1, so that an explanation is omitted.

In the disconnecting device according to Embodiment 5, which is configured as described above, an effect, which is similar to an effect according to Embodiment 1, is obtained, and the side wall portions 14 for partitioning portions among the phases are deleted, whereby a cost of a manufacturing facility (an injection mold or the like for an insulating material) or a material cost of the insulating frame 10 can be reduced.

### Embodiment 6

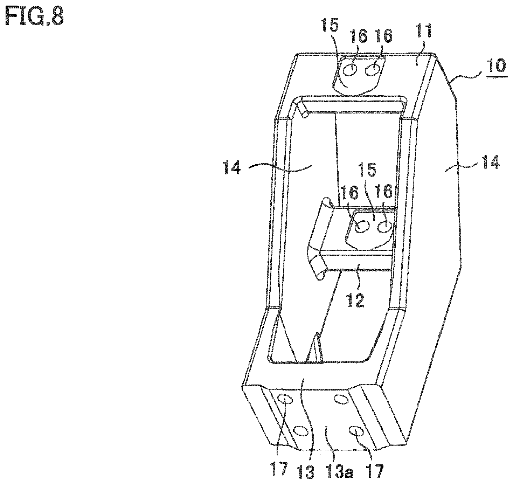

Hereinafter, a disconnecting device according to Embodiment 6 of the present invention will be explained. FIG. 8 is an oblique perspective view which indicates an insulating frame of the disconnecting device according to Embodiment 6 of the present invention.

In the above-described disconnecting device according to Embodiment 1, the insulating frame 10, which is integrated for the three phases, is used. However, in the disconnecting device according to Embodiment 6, an insulating frame 10 is manufactured for each of phase units, as indicated in FIG. 8, and insulating frames 10, which are corresponding to a required phase number, are arranged in parallel (there insulating frames 10 are arranged in parallel when the frames are used for three phases). The other configuration according to Embodiment 6 is similar to the configuration according to Embodiment 1, so that an explanation is omitted.

In the disconnecting device according to Embodiment 6, which is configured as described above, an effect, which is similar to an effect according to Embodiment 1, can be obtained, and the insulating frames 10, which are corresponding to a required phase number, can be provided. In addition, the configuration of the disconnecting device according to Embodiment 6 can be also applied to the configurations of the disconnecting devices according to Embodiment 2 through Embodiment 5.

In the above-described disconnecting devices according to Embodiment 1 through Embodiment 6, the first base portion 11 is arranged at an upper side of each of the disconnecting devices, and the third base portions 13 are arranged at a lower side of each of the disconnecting devices.

However, instead of the above-described configuration, it is suitable that each of the disconnecting devices has a configuration in which the first base portion 11 is arranged at a lower side of the disconnecting device, and third base portions 13 are arranged at an upper side of the disconnecting device. The insulating frame 10 can be suitably arranged in accordance with installation space of the disconnecting device.

In the scope of the present invention, it is possible that various modifications are possible, without departing from the scope of the invention, as defined by the appended claims.

### Description of the Symbols

- 10: insulating frame
- 11: base portion
- 12: base portions
- 13: base portions
- 14: side wall portions
- 15: dent portions
- 16: holes for fastening bolt
- 17: fixing holes
- 18: protrusion wall portions
- 19: protrusion portions for engaging
- 20: connecting terminal
- 24: hinge terminal
- 25: movable blade
- 100: gas-insulated switchgear
- 102a: tank front plate
- 104: disconnecting device.

## Claims

1. A disconnecting device comprising:
a gas pressure tank (102) ;
a support (28) which is mounted at an inner circumference side of a tank front plate (102a), by which a wall surface of the gas pressure tank (102) is composed, and rotatably supports a three-phase operation hinge (26) ;
an operation mechanism (106) for disconnecting device, which is mounted at an outer circumference side of the tank front plate (102a), and drives the three-phase link hinge (26) ;
an insulating frame (10) which is mounted at the inner circumference side of the tank front plate (102a) ;
a hinge terminal (24) which rotatably supports one end portion of a movable blade (25) which is linked to the three-phase operation hinge (26) so as to be driven; and
an connecting terminal (20) which is separated by the other end portion of the movable blade (25) ; **characterised in that**
the insulating frame (10) includes at least a pair of side wall portions (14) which are provided in a state where the side wall portions include a space portion between the mutual side wall portions (14) and are separated at both
sides; a first base portion (11) which is integrally provided, between the pair of side wall portions (14), at one side end portion of the side wall portions (14), with the side wall portions (14), and includes a fixing portion by which the connecting terminal (20) is fixed; second base portions (12) which are integrally provided, between the pair of wall portions (14), with the side wall portions (14), and include a fixing portion by which the hinge terminal (24) is fixed; and third base portions (13) which are integrally provided, at the other side end portion of the side wall portions (14), with the side wall portions (14), and are fixed to the tank front plate (102a); and the movable blade (25) is rotatably provided at the second base portions (12) in a front-back direction of the disconnecting device with respect to a vertical line in a state where a rotatable hinge of the hinge terminal (24) is used as a supporting point, and the connecting terminal (20) is provided at the first base portion (11) which is arranged in an oblique upper direction with respect to a rotational supporting point of the movable blade (25); and the third base portions (13) of the insulating frame (10) include contacting surfaces (13a) for the tank front plate (102a) of the gas pressure tank (102); and the side wall portions (14) are formed in a vertical plate shape in which a plate width direction is faced to a vertical direction in a state where the side wall portions (14) are faced from the contacting surface (13a) for the tank front plate (102a) to a deep direction.

2. The disconnecting device as recited in claim 1,
wherein the side wall portions (14) are formed in a vertical plate shape which is parallel to a direction of an operation force of the movable blade (25), and the side wall portions (14) are short in a width direction and are long in a vertical direction.

3. The disconnecting device as recited in claim 1 or claim 2,
wherein dent portions (15), which are fitted to shapes of bottom surfaces of the connecting terminal (20) and the hinge terminal (24), and holes 16 for fixing bolts are provided at the fixing portions.

4. The disconnecting device as recited in claim 1 or claim 2,
wherein protrusion wall portions (18), which surround outer circumferences of the connecting terminal (20) and the hinge terminal (24), and holes (16) for fixing bolts are provided at the fixing portions.

5. The disconnecting device as recited in claim 1 or claim 2,
wherein dent portions (15), which are fitted to outside shapes of the connecting terminal (20) and the hinge terminal (24), and holes (16) for fixing bolts are provided at the fixing portions.

6. The disconnecting device as recited in claim 1 or claim 2,
wherein protrusion wall portions (18), which are fitted to outside shape widths of the connecting terminal (20) and the hinge terminal (24), protrusion portions (19) for fixing, to which fixing holes (17) of the connecting terminal (20) and the hinge terminal (24) are engaged, and holes (16) for fixing bolts are provided at the fixing portions.

7. The disconnecting device as recited in claim 1 or claim 2,
wherein side wall portions (14), by which three-phase portions are partitioned, are integrally formed at the insulating frame (10).

8. The disconnecting device as recited in claim 1 or claim 2,
wherein the insulating frame (10) is formed by side wall portions (14) by which the space portion, which is common to three-phase portions, is formed.

9. The disconnecting device as recited in claim 1 or claim 2,
wherein the insulating frame (10) is formed for each of phases.

10. A gas-insulated switchgear,
wherein the disconnecting device as recited in any one of claims 1 through 9, a circuit breaker (103) which is installed and arranged in the gas pressure tank (102) so as to break an electric current, and an operation mechanism (105) for circuit breaker, by which the circuit breaker (103) is operated, are included in a case (101).

## Patentansprüche

1. Trennvorrichtung, die Folgendes aufweist:
- einen Gasdrucktank (102);
- einen Träger (28), der an einer Innenumfangsseite einer Tankvorderplatte (102a) angebracht ist, aus der eine Wandfläche des Gasdrucktanks (102) zusammengesetzt ist, und der ein Dreiphasen-Betätigungsgelenk (26) drehbar trägt;
- einen Betätigungsmechanismus (106) für die Trennvorrichtung, der an einer Außenumfangsseite der Tankvorderplatte (102a) angebracht ist, und das Dreiphasen-Betätigungsgelenk (26) antreibt;
- einen Isolierrahmen (10), der an der Innenumfangsseite der Tankvorderplatte (102a) angebracht ist;
- einen Gelenkanschluss (24), der den einen Endbereich einer bewegbaren Klinge (25) drehbar trägt, die so mit dem Dreiphasen-Betätigungsgelenk (26) verbunden ist, dass sie angetrieben wird; und
- einen Verbindungsanschluss (20), der von dem anderen Endbereich der bewegbaren Klinge (25) getrennt ist;
**dadurch gekennzeichnet,**
**dass** der Isolierrahmen (10) Folgendes aufweist:
- mindestens ein Paar von Seitenwandbereichen (14), die in einem Zustand angeordnet sind, in dem die Seitenwandbereiche einen Raumbereich zwischen den gegenüberliegenden Seitenwandbereichen (14) aufweisen und an beiden Seiten getrennt sind;
- einen ersten Basisbereich (11), der zwischen dem Paar von Seitenwandbereichen (14) an dem einen Seitenendbereich der Seitenwandbereiche (14) integral mit den Seitenwandbereichen (14) ausgebildet ist und der einen Befestigungsbereich aufweist, mit dem der Verbindungsanschluss (20) befestigt ist;
- zweite Basisbereiche (12), die zwischen dem Paar von Wandbereichen (14) integral mit den Seitenwandbereichen (14) ausgebildet sind und einen Befestigungsbereich aufweisen, mit dem der Gelenkanschluss (24) befestigt ist; und
- dritte Basisbereiche (13), die an dem anderen Seitenendbereich der Seitenwandbereiche (14) integral mit den Seitenwandbereichen (14) ausgebildet sind und an der Tankvorderplatte (102a) befestigt sind; und
- wobei die bewegbare Klinge (25) drehbar an den zweiten Basisbereichen (12) angebracht ist, und zwar in einer Vorwärts-Rückwärts-Richtung der Trennvorrichtung bezogen auf eine vertikale Linie in einem Zustand, in dem ein drehbares Gelenk des Gelenkanschlusses (24) als Stützpunkt verwendet wird, und
- wobei der Verbindungsanschluss (20) an dem ersten Basisbereich (11) angebracht ist, der in einer Richtung schräg nach oben bezogen auf einen Drehstützpunkt der bewegbaren Klinge (25) angeordnet ist; und
- wobei die dritten Basisbereiche (13) des Isolierrahmens (10) Kontaktflächen (13a) für die Tankvorderplatte (102a) des Gasdrucktanks (102) aufweisen; und wobei die Seitenwandbereiche (14) in vertikaler Plattenform ausgebildet sind, bei der die Plattenbreitenrichtung einer vertikalen Richtung gegenüberliegt, und zwar in einem Zustand, in dem die Seitenwandbereiche (14) von der Kontaktfläche (13a) für die Tankvorderplatte (102a) in eine Tiefenrichtung zeigen.

2. Trennvorrichtung nach Anspruch 1,
wobei die Seitenwandbereiche (14) in einer vertikalen Plattenform ausgebildet sind, die parallel zu der Richtung einer Betätigungskraft der bewegbaren Klinge (25) ist, und wobei die Seitenwandbereiche (14) in der Breitenrichtung kurz und in der vertikalen Richtung lang ausgebildet sind.

3. Trennvorrichtung nach Anspruch 1 oder Anspruch 2,
wobei Einbuchtungsbereiche (15), die an Formen von Bodenflächen des Verbindungsanschlusses (20) und des Gelenkanschlusses (24) angepasst sind, und Löcher (16) für Befestigungsschrauben an den Befestigungsbereichen angeordnet sind.

4. Trennvorrichtung nach Anspruch 1 oder Anspruch 2,
wobei Vorsprungswandbereiche (18), die den Außenumfang des Verbindungsanschlusses (20) und des Gelenkanschlusses (24) umgeben, und Löcher (16) für Befestigungsschrauben an den Befestigungsbereichen angeordnet sind.

5. Trennvorrichtung nach Anspruch 1 oder Anspruch 2,
wobei Einbuchtungsbereiche (15), die an Außenformen des Verbindungsanschlusses (20) und des Gelenkanschlusses (24) angepasst sind, und Löcher (16) für Befestigungsbolzen an den Befestigungsbereichen angeordnet sind.

6. Trennvorrichtung nach Anspruch 1 oder Anspruch 2,
wobei Vorsprungswandbereiche (18), die an Außenformbreiten des Verbindungsanschlusses (20) und des Gelenkanschlusses (24) angepasst sind, Vorsprungsbereiche (19) zum Befestigen, mit denen Befestigungslöcher (17) des Verbindungsanschlusses (20) und des Gelenkanschlusses (24) in Eingriff kommen, und Löcher (16) für Befestigungsschrauben an den Befestigungsbereichen angeordnet sind.

7. Trennvorrichtung nach Anspruch 1 oder Anspruch 2,
wobei Seitenwandbereiche (14), mit denen Dreiphasenbereiche unterteilt sind, integral an dem Isolierrahmen (10) ausgebildet sind.

8. Trennvorrichtung nach Anspruch 1 oder Anspruch 2,
wobei der Isolierrahmen (10) mittels Seitenwandbereiche (14) ausgebildet ist, mit denen der Raumbereich, der für den Dreiphasenbereich gemeinsam vorgesehen ist, ausgebildet ist.

9. Trennvorrichtung nach Anspruch 1 oder Anspruch 2,
wobei der Isolierrahmen (10) für jede der Phasen ausgebildet ist.

10. Gasisolierte Schaltanlage,
wobei die Trennvorrichtung nach einem der Ansprüche 1 bis 9, ein Leistungsschalter (103), der derart in dem Gasdrucktank (102) montiert und angeordnet ist, dass ein elektrischer Strom unterbrochen wird, und ein Betätigungsmechanismus (105) für den Leistungsschalter, mit dem der Leistungsschalter (103) betätigt wird, in einem Gehäuse (101) angeordnet sind.

## Revendications

1. Dispositif de déconnexion comprenant :
- un réservoir à gaz sous pression (102) ;
- un support (28) qui est monté sur un côté circonférentiel intérieur d'une plaque avant (102a) du réservoir, au moyen duquel une surface de paroi du réservoir à gaz sous pression (102) est composée, et qui supporte en rotation une articulation opérationnelle à trois phases (26) ;
- un mécanisme d'actionnement (106) pour dispositif de déconnexion, qui est monté sur un côté circonférentiel extérieur de la plaque avant (102a) du réservoir, et qui entraîne l'articulation de liaison à trois phases (26) ;
- un cadre isolant (10) qui est monté sur le côté circonférentiel intérieur de la plaque avant (102a) du réservoir ;
- une borne d'articulation (24) qui supporte en rotation une portion terminale d'une lame mobile (25), laquelle est reliée à l'articulation opérationnelle à trois phases (26) de manière à être entraînée ; et
- une borne de connexion (20) qui est séparée par l'autre portion terminale de la lame mobile (25) ;
**caractérisé en ce que**
le cadre isolant (10) inclut
- au moins une paire de portions de parois latérales (14) qui sont prévues dans un état dans lequel les portions de parois latérales incluent une portion d'espace entre les portions de parois latérales mutuelles (14) et qui sont séparées sur les deux côtés ;
- une première portion de base (11) qui est dotée de manière intégrale, entre la paire de portions de parois latérales (14), sur une portion d'extrémité latérale des portions de parois latérales (14), des portions de parois latérales (14), et qui inclut une portion de fixation par laquelle la borne de connexion (20) est fixée ;
- des secondes portions de base (12) qui sont dotées de façon intégrale, entre la paire de portions de parois (14), des portions de parois latérales (14), et qui incluent une portion de fixation par laquelle la borne d'articulation (24) est fixée ; et
- des troisièmes portions de base (13) qui sont dotées de manière intégrale, au niveau de l'autre portion d'extrémité latérale des portions de parois latérales (14), des portions de parois latérales, et qui sont fixées sur la plaque avant (102a) du réservoir ; et la lame mobile (25) et prévue en rotation au niveau des secondes portions de base (12) dans une direction avant/arrière du dispositif de déconnexion par rapport à une ligne verticale dans un état où une articulation rotative de la borne d'articulation (24) est utilisée à titre de point de support, et la borne de connexion (20) est prévue au niveau de la première portion de base (11) qui est agencée dans une direction en oblique vers le haut par rapport à un point de support de rotation de la lame mobile (25) ; et les troisièmes portions de base (13) du cadre isolant (10) inclue nt des surfaces de mise en contact (13a) pour la plaque avant (102a) du réservoir à gaz sous pression (102) ; et les portions de parois latérales (14) sont formées sous une forme de plaques verticales dans laquelle une direction en largeur de la plaque fait face vers une direction verticale, dans un état dans lequel les portions de parois latérales (14) sont en face de la surface de mise en contact (13a) pour la plaque avant (102a) du réservoir vers une direction en profondeur.

2. Dispositif de déconnexion selon la revendication 1,
dans lequel les portions de parois latérales (14) sont formées sous une forme de plaque verticale qui est parallèle à une direction d'une force d'actionnement de la lame mobile (25), et les portions de parois latérales (14) sont courtes dans une direction en largeur et sont longues dans une direction verticale.

3. Dispositif de déconnexion selon la revendication 1 ou 2,
dans lequel des portions en creux (15), qui sont adaptées à des formes des surfaces inférieures de la borne de connexion (20) et de la borne d'articulation (24), et des trous (16) pour des boulons de fixation sont prévus au niveau des portions de fixation.

4. Dispositif de déconnexion selon la revendication 1 ou 2,
dans lequel des portions de parois en projection (18), qui entourent des circonférences extérieures de la borne de connexion (20) et de la borne d'articulation (24), et des trous (16) pour des boulons de fixation sont prévus au niveau des portions de fixation.

5. Dispositif de déconnexion selon la revendication 1 ou 2,
dans lequel des portions en creux (15), qui sont adaptées à des formes extérieures de la borne de connexion (20) et de la borne articulation (24), et des trous (16) pour des boulons de fixation sont prévus au niveau des portions de fixation.

6. Dispositif de déconnexion selon la revendication 1 ou 2,
dans lequel des portions de parois en projection (18), qui sont adaptées à des largeurs de forme extérieure de la borne de connexion (20) et de la borne d'articulation (24), des portions en projection (19) pour la fixation, avec lesquelles des trous de fixation (17) de la borne de connexion (20) et de la borne d'articulation (24) sont engagés, et des trous (16) pour des boulons de fixation sont prévus au niveau des portions de fixation.

7. Dispositif de déconnexion selon la revendication 1 ou 2,
dans lequel des portions de parois latérales (14), par lesquelles des portions à trois phases sont cloisonnées, sont formées de manière intégrale au niveau du cadre isolant (10).

8. Dispositif de déconnexion selon la revendication 1 ou 2,
dans lequel le cadre isolant (10) est formé par des portions de parois latérales (14) par lesquelles est formée la portion d'espace, qui est commune aux portions à trois phases.

9. Dispositif de déconnexion selon la revendication 1 ou 2,
dans lequel le cadre isolant (10) est formé pour chacune des phases.

10. Dispositif de commutation à isolation gazeuse,
dans lequel le dispositif de déconnexion sel on l'une quelconque des revendications 1 à 9, un coupe-circuit (103) qui est installé et agencé dans le réservoir à gaz sous pression (102) de manière à couper un courant électrique, et un mécanisme d'actionnement (105) pour le coupe-circuit, au moyen duquel le coupe-circuit (103) est actionné, sont inclus dans un boîtier.
